## Europäisches Patentamt
## European Patent Office
## Office européen des brevets

(19)

(11) Numéro de publication : **0 135 440 B1**

(12) **FASCICULE DE BREVET EUROPÉEN**

(45) Date de publication du fascicule du brevet :
09.09.87

(51) Int. Cl.⁴ : **H 02 H  7/00**, B 05 B  5/02

(21) Numéro de dépôt : **84401783.0**

(22) Date de dépôt : **10.09.84**

(54) **Dispositif de protection de lignes à basse tension alimentant des éléments de générateurs à haute tension en projection électrostatique, situés dans une zone contenant des mélanges inflammables.**

(30) Priorité : 14.09.83 FR 8314886

(43) Date de publication de la demande :
27.03.85 Bulletin 85/13

(45) Mention de la délivrance du brevet :
09.09.87 Bulletin 87/37

(84) Etats contractants désignés :
DE GB

(56) Documents cités :
FR-A- 1 601 577
FR-A- 2 060 769
GB-A- 2 116 386
US-A- 4 187 527

(73) Titulaire : **SAMES S.A.**
Z.I.R.S.T. Chemin de Malacher
F-38240 Meylan (FR)

(72) Inventeur : **Tholome, Roger**
10 bis, chemin de St Bruno Corenc
F-38700 La Tronche (FR)
Inventeur : **Burtin, Jean-Pierre**
18, rue du Drac
F-38120 Saint Egreve (FR)

(74) Mandataire : **CABINET BONNET-THIRION**
95 Boulevard Beaumarchais
F-75003 Paris (FR)

## Description

L'invention se rapporte à un dispositif de protection pour des équipements de projection électrostatique comportant, dans une zone de travail susceptible de contenir des mélanges inflammables, au moins une partie terminale d'un générateur de haute tension avec une électrode pour la charge électrostatique d'un jet de matière pulvérisée, au moins une ligne électrique sous basse tension reliant la partie terminale du générateur de haute tension à une source de courant écartée equipée d'un moyen de coupure.

L'emploi de générateurs de haute tension continue pour l'alimentation d'appareils de projection électrostatique est bien connu ainsi que le risque d'inflammation des produits de revêtement ou de leurs vapeurs par suite de la production involontaire d'arcs électriques par exemple entre l'électrode haute tension de l'appareil de projection et l'objet à revêtir, généralement relié à la terre. Ce risque est d'autant plus grand que l'énergie électrostatique emmagasinée dans la capacité constituée par l'électrode haute tension, la borne de sortie du générateur et le câble les reliant est grande. Lorsque le générateur est situé loin de l'appareil de projection, par exemple à une dizaine de mètres, la plus grande partie de ladite capacité est constituée par le câble de liaison. On diminue souvent le risque d'arc dû à la capacité du câble en intercalant une résistance d'amortissement entre lui et l'électrode haute tension de l'appareil de projection ; si la capacité de ladite électrode est faible cette protection est suffisante. Sinon, ou pour prendre aussi en compte le risque de détérioration de l'isolement du câble de liaison haute tension on place, sur le trajet du courant circulant sous haute tension, en général entre la borne de terre du générateur et la terre, un détecteur de surintensité, ou un détecteur d'augmentation rapide d'intensité qui, lorsqu'il détecte une anomalie dans le courant haute tension, arrête le générateur haute tension et relie sa borne haute tension à la terre pour décharger rapidement à la terre la capacité chargée sous haute tension. Une autre solution proposée est de diminuer la capacité chargée sous haute tension en supprimant le câble de liaison et en accolant le générateur et l'appareil de projection. Dans cette solution le risque lié à la capacité du câble haute tension disparaît mais celui lié à celle de l'électrode haute tension de l'appareil de projection demeure. On a proposé alors, notamment dans US-A-4 187 527 de procéder comme précédemment et de disposer entre la borne de terre du générateur haute tension et la terre, sur le trajet du courant haute tension, un détecteur d'augmentation du courant commandant l'arrêt du générateur et la mise à la terre de l'électrode haute tension. La mise à la terre du générateur pouvant se faire loin de l'appareil de projection, dans une zone ne contenant pas de mélange combustible, le détecteur d'augmentation de courant haute tension est placé dans une telle zone et ne présente donc aucun risque.

Cependant d'autres risques apparaissent dans cette solution : en effet, même si l'entrée basse tension du générateur haute tension et le dispositif de mise à la terre de l'électrode haute tension sont conçus et réalisés pour ne pas présenter de risque d'arc électrique, les câbles basse tension les reliant à leurs alimentations respectives peuvent difficilement être protégés efficacement contre un tel risque sans devenir raides et lourds, ce qui est inacceptable lorsque l'appareil de projection est mobile et léger, par exemple lorsqu'il est porté par un mécanisme de manipulation à plusieurs degrés de liberté. Il n'est, par ailleurs, pas possible de limiter l'énergie disponible dans ces câbles basse tension, par exemple en les rendant intrinsèquement sûrs à l'aide de barrières Zener, car la puissance à transmettre est trop importante. Cette puissance étant généralement transportée sous forme d'un courant de l'ordre de l'Ampère circulant sous quelques dizaines de volts, le risque de court-circuit entre les conducteurs des câbles basse tension parcourus par ces courants est facilement écarté par l'emploi de disjoncteurs à maxima d'intensité et/ou de fusibles rapides. Il n'en va pas de même du risque d'interruptions intermittentes des circuits constitués par ces câbles, par exemple par suite de la rupture d'un conducteur due à la fatigue provoquée par les flexions alternées qui lui sont infligées lors de la manipulation. En effet, ces interruptions intermittentes ne provoquent pas de surintensités décelables par les dispositifs cités précédemment mais elles peuvent cependant, par suite de la self-induction et/ou de la capacité des circuits considérés, provoquer des arcs électriques susceptibles d'enflammer des mélanges inflammables.

Pour pallier ces risques résultant d'interruptions intermittentes, l'invention propose un équipement de pulvérisation électrostatique comportant, dans une zone de travail susceptible de contenir des mélanges inflammables, une partie terminale d'un générateur de haute tension alimentant une électrode haute tension d'un projecteur pour charger électrostatiquement un jet de matière pulvérisée, une ligne électrique sous basse tension reliant la partie terminale du générateur de haute tension à une source de courant sous basse tension écartée de la zone de travail et équipée d'un moyen de coupure placé en série par rapport à ladite ligne électrique, et un dispositif de protection destiné à prévenir l'apparition d'arcs dans la zone de travail, caractérisé en ce que, pour prévenir l'apparition d'arcs dans la zone de travail par suite de détériorations de ladite ligne électrique, le dispositif de protection comprend un moyen de détection pour détecter que le courant circulant dans ladite ligne électrique est inférieur à une valeur minimale prédéterminée et un moyen de commande sensible au moyen de détection et couplé au moyen de coupure de façon à faire fonctionner ce dernier pour bloquer la fourniture de courant à ladite ligne électrique lorsque le courant dans cette ligne devient inférieur à ladite valeur minimale prédéterminée.

Ainsi, lorsqu'une rupture d'un conducteur de la ligne d' alimentation s'amorce, avec des coupures intermittentes de la continuité, les baisses de courant résultantes, décelées par le moyen de détection, provoquent l'intervention du moyen de commande qui met en action le moyen de coupure, pour prévenir l'apparition d'arcs répétés.

De préférence, la source fournit un courant unidirectionnel. Le moyen de détection de minimum de courant peut alors comprendre une résistance en série dans la ligne, couplé à l'entrée d'un comparateur à seuil.

En disposition préférée on équipe la source d'un moyen de court-circuit en dérivation sur la ligne électrique, qui fonctionne en conjonction avec le moyen de coupure, pour décharger la ligne lorsque la source est coupée.

Lorsque l'électrode de charge du jet de matière pulvérisée est équipée d'un moyen de mise à la terre à commande électrique, la ligne de commande du moyen de mise à la terre est protégée par un dispositif analogue à la ligne d'alimentation de la partie terminale du générateur de haute tension.

Les caractéristiques et avantages de l'invention ressortiront d'ailleurs de la description qui va suivre, à titre d'exemple, en référence aux dessins annexés dans lesquels :

la figure 1 est une représentation schématique de l'organisation d'un dispositif selon l'invention ;

la figure 2 est un schéma d'un mode de réalisation de dispositif selon l'invention.

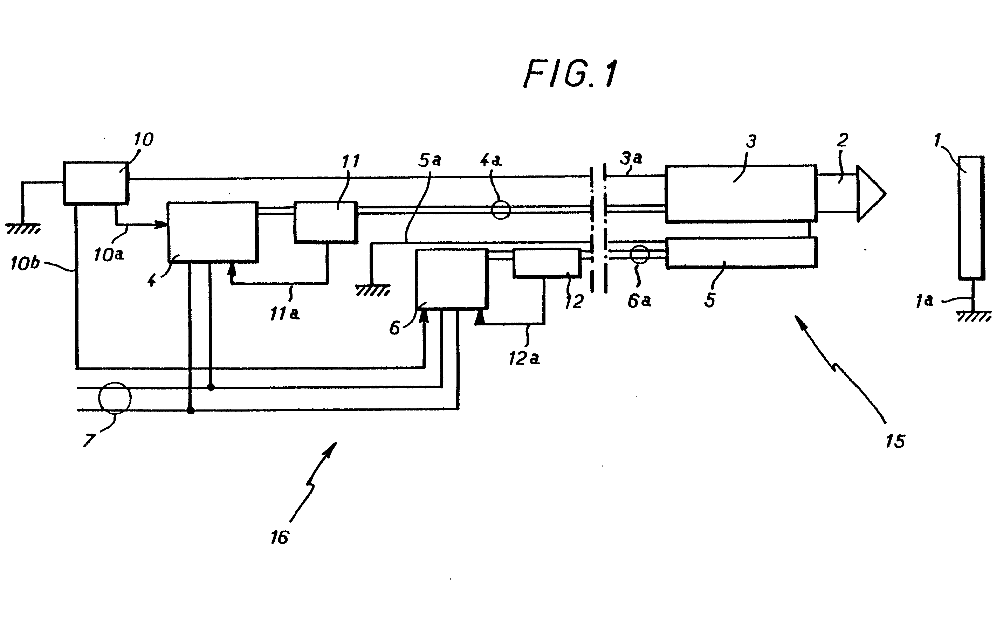

Selon la forme de réalisation choisie et représentée figure 1, en face d'un objet à revêtir 1, mis à la terre par la ligne 1a, est placé un appareil de projection électrostatique 2 alimenté en haute tension continue par un générateur 3 lui-même mis à la terre par la ligne 3a et recevant l'énergie d'une alimentation 4 par la ligne basse tension 4a. Un dispositif de décharge rapide 5 de l'électrode haute tension de l'appareil de projection 2 est lui-même mis à la terre par la ligne 5a et reçoit l'énergie d'une alimentation 6 par la ligne basse tension 6a. Les alimentations basse tension 4 et 6 reçoivent elles-mêmes leur énergie d'une source de tension non représentée par la ligne 7.

Un premier dispositif de sécurité 10 détecte toute variation ou valeur dangereuse du courant haute tension dans la ligne de mise à la terre 3a du générateur 3. Ce dispositif 10 réagit sur l'alimentation basse tension 4 du générateur 3 par la ligne 10a et sur l'alimentation basse tension 6 du dispositif de décharge rapide 5 par la ligne 10b, de façon déjà connue. Un second dispositif de sécurité 11 détecte toute variation, ou valeur, dangereuse du courant basse tension circulant dans la ligne 4a et réagit sur l'alimentation basse tension 4 par la ligne 11a.

De façon analogue, un troisième dispositif 12 détecte toute variation, ou valeur, dangereuse du courant basse tension circulant dans la ligne 6a et réagit sur l'alimentation basse tension 6 par la ligne 12a.

L'objet à revêtir, l'appareil de projection, le générateur de haute tension et le dispositif de décharge rapide de l'électrode haute tension sont situés dans la zone 15 pouvant contenir des mélanges inflammables alors que les autres composants de l'installation, tels que les alimentations et les dispositifs de sécurité sont situés dans la zone 16 ne contenant pas de tels mélanges, les liaisons entre ces deux groupes de composants étant effectuées par les lignes de terre 3a et 5a et les lignes basse tension 4a et 6a.

Fonctionnement de l'installation.

Si l'objet à revêtir 1 s'approche trop de l'électrode haute tension du projecteur 2 il se produit une augmentation du courant de haute tension dans la ligne 3a qui est détectée, de façon connue en soi, par le détecteur 10 qui arrête, par la ligne 10a, l'alimentation basse tension 4 du générateur haute tension 3 et provoque, par la ligne 10b, l'alimentation basse tension 6 et la ligne basse tension 6a, la mise à la terre, grâce au dispositif 5 de l'électrode haute tension du projecteur 2. Si, par exemple, par suite de mouvements répétés de l'ensemble projecteur-générateur-dispositif de décharge, la ligne de puissance basse tension 4a alimentant le générateur haute tension 3 et/ou la ligne de puissance basse tension 6a alimentant le dispositif de décharge sont interrompues il se produira, par suite des mouvements dudit ensemble, des interruptions intermittentes des circuits constitués par ces lignes 4a et 6a et des arcs électriques pourront jaillir à l'endroit de ces interruptions situées dans la zone dangereuse 15. Les dispositifs de sécurité 11 et 12 respectivement détecteront ces interruptions, et en particulier les baisses rapides de courant correspondantes et arrêteront respectivement les alimentations basse tension 4 et 6 en provoquant si nécessaire la mise en court-circuit des conducteurs des lignes 4a et 6a pour dissiper, hors de la zone dangereuse 15, l'energie qui peut y être emmagasinée sous forme inductive ou capacitive.

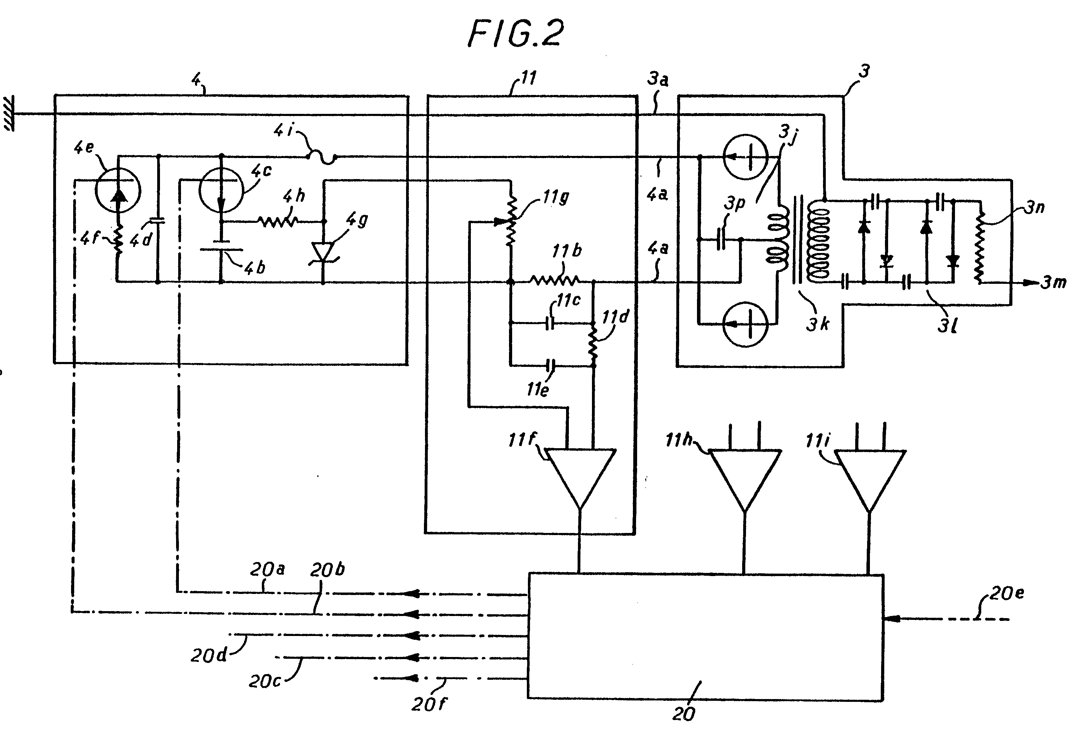

Détail d'une forme de réalisation d'un des dispositifs de sécurité pour les lignes de puissance basse tension (figure 2)

Le générateur haute tension 3 constitué principalement d'un oscillateur classe C 3j, d'un transformateur haute tension 3k et d'un multiplicateur de tension 3l alimente en haute tension continue la borne 3m par l'intermédiaire de la résistance d'amortissement 3n. Il est relié à la terre par la ligne 3a. Un condensateur 3p fournit les pointes de courant nécessaires au fonctionnement de l'oscillateur.

L'oscillateur 3j est alimenté en tension continue, plus ou moins pulsée par l'alimentation 4 via la ligne bifilaire 4a. L'alimentation 4 comprend principalement une source de tension continue, symbolisée ici sous forme d'une pile 4b, un transistor balast 4c, un condensateur 4d, un transistor de décharge 4e et sa résistance de protection 4f. L'alimentation comprend aussi une diode Zener 4g et une résistance 4h de stabilisation de l'alimentation du dispositif 11. Un fusible 4i à fusion rapide protège la ligne 4a contre les surintensités, par exemple dues à un court-circuit entre ses conducteurs. Le dispositif 11 comprend un circuit de détection constitué par la résistance 11b et le condensateur de liaison de la composante alternative 11c, un filtre constitué par la résistance 11d et le condensateur 11e, l'amplificateur opérationnel 11f qui compare la tension obtenue sur le condensateur 11e et la tension de référence continue donnée par le potentiomètre 11g, alimenté par la résistance 4h et la diode Zener 4g. Une bascule bistable 20 est à son tour actionnée par l'amplificateur opérationnel 11f et éventuellement par d'autres amplificateurs 11h, 11i, contrôlés par d'autres dispositifs de détection non représentés. Cette bascule 20 actionne à son tour par la ligne 20a le transistor 4c d'alimentation de l'oscillateur 3j et par la ligne 20b le transistor 4e de décharge des condensateurs 3p et 4d ainsi que celle de la ligne 4a. Par d'autres lignes 20c et 20d par exemple elle agirait de même sur l'alimentation 12 du dispositif de décharge 5 de l'électrode haute tension du projecteur 2. Une ligne de commande extérieure 20e permet de bloquer volontairement le fonctionnement de la bascule 20 lors de variations voulues de courant dans la ligne 4a par exemple lors des opérations de mise en marche, de réglage ou d'arrêt du générateur haute tension 3. Une ligne 20f permet de déclencher un signal avertissant du fonctionnement du dispositif.

Fonctionnement du dispositif représenté figure 2.

Lorsque le courant continu éventuellement pulsé parcourant la ligne 4a est normal, la comparaison de la tension détectée par les circuits 11b, 11c, 11d, 11e avec la tension continue réglée par le potentiomètre 11g maintient l'amplificateur 11f et la bascule 20 dans un état tel que l'alimentation 4 peut continuer à fournir le courant normal. Si la ligne 4a vient à subir une ou des interruptions entre le dispositif 11 et le générateur 3, il se produit des baisses importantes et rapides de courant traduites par des baisses de la tension appliquée à l'amplificateur 11f. Ces baisses de tension, amplifiées par l'amplificateur, provoquent le changement d'état de la bascule 20. Ce changement d'état produit à son tour l'arrêt de l'alimentation 4 grâce au blocage du transistor 4c par la ligne 20a et la décharge des condensateurs 3p et 4d ainsi que celle de la ligne 4a grâce au déblocage du transistor 4e. Ce changement d'état peut aussi grâce aux lignes 20c et 20d exercer des actions similaires sur l'alimentation 6 du dispositif de décharge 5. Il actionne aussi, grâce à la ligne 20f, un signal d'alarme. Les composants des circuits électriques sont choisis de manière à assurer une réponse aussi rapide que possible tout en évitant des actions intempestives liées aux parasites existant dans le circuit basse tension en fonctionnement normal. Des temps de réponse de l'ordre de quelques millisecondes ont ainsi couramment été obtenus.

**Revendications**

1. Equipement de pulvérisation électrostatique comportant, dans une zone de travail (15) susceptible de contenir des mélanges inflammables, une partie terminale (3) d'un générateur de haute tension alimentant une électrode haute tension d'un projecteur (2) pour charger électrostatiquement un jet de matière pulvérisée, une ligne électrique sous basse tension (4a) reliant la partie terminale (3) du générateur de haute tension à une source de courant sous basse tension (4b) écartée de la zone de travail (15) et équipée d'un moyen de coupure (4c) placé en série par rapport à ladite ligne électrique (4a), et un dispositif de protection destiné à prévenir l'apparition d'arcs dans la zone de travail (15), caractérisé en ce que, pour prévenir l'apparition d'arcs dans la zone de travail (15) par suite de détériorations de ladite ligne électrique (4a), le dispositif de protection comprend un moyen de détection (11) pour détecter que le courant circulant dans ladite ligne électrique (4a) est inférieur à une valeur minimale prédéterminée et un moyen de commande (20) sensible au moyen de détection (11) et couplé au moyen de coupure (4c) de façon à faire fonctionner ce dernier pour bloquer la fourniture de courant à ladite ligne électrique (4a) lorsque le courant dans cette ligne devient inférieur à ladite valeur minimale prédéterminée.

2. Equipement selon la revendication 1, caractérisé en ce que la source (4b) fournit un courant unidirectionnel.

3. Equipement selon la revendication 2, caractérisé en ce que le moyen de détection (11) d'un minimum de courant comprend une résistance (11b) en série dans la ligne (4a), couplée à l'entrée d'un comparateur à seuil (11f, 11g).

4. Equipement selon une des revendications 1 et 2, caractérisé en ce que la source (4b) est équipée, outre du moyen de coupure (4c), d'un moyen de court-circuit (4e) en dérivation sur la ligne électrique (4a) et rendu passant par le moyen de commande (20) en conjonction avec le blocage du moyen de coupure (4c).

5. Equipement selon une quelconque des revendications 2 à 4, caractérisé en ce que ledit moyen de commande (20) est une bascule, avec une entrée de neutralisation (20e).

6. Equipement selon une quelconque des revendications 2 à 5, caractérisé en ce que, à la partie terminale (3) du générateur de haute tension est associé un dispositif (5) de mise à la terre de l'électrode (2) de ce générateur, piloté sous basse tension à travers une ligne de commande (6a) équipée d'un moyen de détection (12) de minimum de courant, ce moyen de détection (12) étant couplé à une alimentation (6) dudit dispositif de mise à la terre.

## Claims

1. Electrostatic spraying equipment comprising, in a working zone (15) which may contain inflammable mixtures, a terminal portion (3) of a high voltage generator feeding a high voltage electrode of a spray device (2) for electrostatically charging a jet of sprayed material, a low voltage electric line (4a) connecting the terminal portion (3) of the high voltage generator to a low voltage current source (4b) which is spaced from the working zone (15) and which is provided with a cut-off means (4c) disposed in series with respect to said electric line (4a), and a protective device for preventing the occurrence of arcs in the working zone (15) characterised in that, to prevent the occurrence of arcs in the working zone (15) as a result of deteriorations in said electric line (4a), the protective device comprises a detection means (11) for detecting that the current flowing in said electric line (4a) is lower than a predetermined minimum value and a control means (20) responsive to the detection means (11) and coupled to the cut-off means (4c) so as to cause same to operate to block the supply of current to the electric line (4a) when the current in said line falls below said predetermined minimum value.

2. Equipment according to claim 1 characterised in that the source (4b) supplies a unidirectional current.

3. Equipment according to claim 2 characterised in that the means (11) for detecting a current minimum comprises a resistor (11b) in series in the line (4a), coupled to the input of a threshold comparator (11f, 11g).

4. Equipment according to one of claims 1 and 2 characterised in that the source (4b) is provided, besides the cut-off means (4c), with a short-circuit means (4e) in shunt relationship on the electric line (4a) and put into a transmitting condition by the control means (20) in conjunction with the blocking action of the cut-off means (4c).

5. Equipment according to any one of claims 2 to 4 characterised in that said control means (20) is a flip-flop with a neutralisation input (20e).

6. Equipment according to any one of claims 2 to 5 characterised in that associated with the terminal portion (3) of the high voltage generator is a means (5) for earthing the electrode (2) of said generator, pilot-controlled at low voltage by way of a control line (6a) provided with a detection means (12) for detecting a current mininum, said detection means (12) being coupled to a feed (6) for said earthing means.

## Patentansprüche

1. Anlage zur elektrostatischen Zerstäubung, die in einem Arbeitsbereich (15), der entflammbare Gemische enthalten kann, einen Endteil (3) eines Hochspannungsgenerators aufweist, der eine Hochspannungselektrode einer Spritzvorrichtung (2) mit Hochspannung speist, um einen Strahl von zerstäubtem Material elektrisch aufzuladen, eine Niederspannungsleitung (4a), die den Endteil (3) des Hochspannungsgenerators mit einer vom Arbeitsbereich (15) entfernten Niederspannungsquelle (4b) verbindet, die mit einer in Reihe mit der Niederspannungsleitung liegenden Abschaltvorrichtung (4c) ausgerüstet ist, und eine Schutzvorrichtung zur Verhinderung des Auftretens von Lichtbögen im Arbeitsbereich (15) aufweist, dadurch gekennzeichnet, daß die Schutzvorrichtung zur Verhinderung des Auftretens von Lichtbögen im Arbeitsbereich (15) infolge von Defekten der Niederspannungsleitung (4a), eine Detektorvorrichtung (11) aufweist, welche ermittelt, ob der in der Niederspannungsleitung (4a) fließende Strom geringer als ein vorbestimmter Mindestwert ist, und eine auf die Detektorvorrichtung (11) ansprechende Steuervorrichtung (20) aufweist, die mit der Abschaltvorrichtung (4c) so gekoppelt ist, daß sie letztere so betätigt, daß sie die Stromzufuhr zur Niederspannungsleitung (4a) blockiert, wenn der Strom in dieser Leitung einen geringeren Wert als der vorbestimmte Mindestwert annimmt.

2. Anlage nach Anspruch 1, dadurch gekennzeichnet, daß die Niederspannungsquelle (4b) einen unipolaren Strom liefert.

3. Anlage nach Anspruch 2, dadurch gekennzeichnet, daß die Detektorvorrichtung (11) zur Feststellung eines Stromminimums einen Widerstand (11b) aufweist, der In Reihe in der Niederspannungsleitung (4a) liegt und mit dem Eingang eines Schwellenwertkomparators (11f, 11g) gekoppelt ist.

4. Anlage nach einem der Ansprüche 1 und 2, dadurch gekennzeichnet, daß die Niederspannungsquelle (4b) außer mit der Abschaltvorrichtung (4c) mit einer Kurzschlußvorrichtung (4e) ausgerüstet ist, die im Nebenschluß zur Niederspannungsleitung (4a) liegt und durch die Steuervorrichtung (20) im Zusammenhang mit der Blockierung der Abschaltvorrichtung (4c) durchgeschaltet wird.

5. Anlage nach einem der Ansprüche 2 bis 4, dadurch gekennzeichnet, daß die Steuervorrichtung (20) eine Kippschaltung mit einem Abschalteingang (20e) ist.

6. Anlage nach einem der Ansprüche 2 bis 5, dadurch gekennzeichnet, daß der Endteil (3) des Hochspannungsgenerators mit einer Vorrichtung (5) zum Erden der Elektrode (2) dieses Generators zusammenwirkt, die mit Niederspannung durch eine Steuerleitung (6a) eingeschaltet wird, die mit einer Detektorvorrichtung (12) zur Feststellung des Strommindestwertes ausgerüstet ist, wobei diese Detektorvorrichtung (12) mit einer Stromversorgung (6) der Erdungsvorrichtung gekoppelt ist.

# FIG.1

0 135 440

# FIG.2

0 135 440